# NEUE EUROPÄISCHE PATENTSCHRIFT

(11) **EP 1 350 707 B2**
(45) Veröffentlichungstag und Bekanntmachung des Hinweises auf die Entscheidung über den Einspruch: **07.03.2012**
(45) Hinweis auf die Patenterteilung: 21.06.2006
(21) Anmeldenummer: 02027913.9
(22) Anmeldetag: 13.12.2002
(51) Int. Cl.: B62D 1/28, B62D 15/02

(54) **Vorrichtung zur Querführungsunterstützung bei Kraftfahrzeugen**
Lateral guiding assistance device for vehicles
Dispositif d'assistance de guidage latéral pour véhicules

(30) Priorität: 03.04.2002 DE 10214612
(43) Veröffentlichungstag der Anmeldung: 08.10.2003
(73) Patentinhaber: ROBERT BOSCH GMBH, 70442 Stuttgart (DE)
(72) Erfinder: Braeuchle, Goetz, 74934 Reichartshausen (DE); Heinebrodt, Martin, 70176 Stuttgart (DE); Boecker, Juergen, 70499 Stuttgart (DE)

(56) Entgegenhaltungen:
- EP-A- 1 063 149
- DE-A- 4 014 365
- DE-A- 10 017 279
- DE-C1- 4 332 836
- US-A- 5 245 422
- US-B1- 6 198 992

## Beschreibung

### STAND DER TECHNIK

Die Erfindung betrifft eine Vorrichtung zur Querführungsunterstützung bei Kraftfahrzeugen, mit einer Sensoreinrichtungzur Erfassung der Ist-Position des Fahrzeugs relativ zu den Grenzen der befahrenen Spur und einer Regeleinrichtung, die aufgrund eines Vergleichs der Ist-Position mit einem Sollwert einen Befehl zur Erzeugung eines den Fahrer bei seinen Lenkaktionen unterstützenden Lenkdrehmoments ausgibt, gemäß Anspruch 1.

In Kraftfahrzeugen werden zunehmend Systeme eingesetzt, die den Fahrer bei der Fahrzeugführung unterstützen oder ihm spezielle Fahrmanöver erleichtern (Advanced Driver Assistance Systems; ADAS). Eine Funktion dieser Systeme ist die Querführungsunterstützung (Lane Keeping Support; LKS). Dabei wird die Ist-Position des Fahrzeugs relativ zu der befahrenen Fahrspur ermittelt und mit einem Sollwert verglichen, der typischerweise der Mitte der Spur entspricht. Der durch Soll/Ist-Vergleich gebildete Befehl besteht dann in einem Stellsignal für einen Lenkungsstellglied, das ein entsprechendes Lenkdrehmoment erzeugt. Der Fahrer hat jedoch stets die Möglichkeit, über das Lenkrad ein zusätzliches Lenkdrehmoment auszuüben, um die Regelfunktion des ADAS-Systems zu übersteuern.

Aus der US 6,198,992 B1 ist ein automatisches Fahrzeugführungssystem für einen Traktor oder ein sonstiges Landmaschinenfahrzeug bekannt, das eine Übersteuerungseinrichtung aufweist, mittels der die automatische Lenksteuerung im Fall einer Gefahrensituation abschaltbar ist.

Aus der DE 43 32 836 C1 ist eine lenkregelnde Vorrichtung bekannt, bei der neben einer Fahrzeuglageerkennungseinrichtung und einer Lenkregelungseinrichtung, die eine Lenkwinkelstelleinrichtung beaufschlagt, sowohl eine vorwählbare Begrenzung der regelungsangeforderten Lenkwinkeleinstellung sowie auch die Überlagerung einer fahrerangeforderten Lenkwinkeleinstellung mit der regelungsangeforderten Lenkwinkeleinstellung beinhaltet ist, wobei die Lenkwinkelstelleinrichtung den Lenkwinkel gemäß dieser Überlagerung einstellt. Damit werden kleinere Lenkbewegungen von der Regelung bewältigt, während der Fahrer gleichzeitig seine Eingriffsmöglichkeit für größere Lenkbewegungen, z. B. für Fahrspurwechsel und Ausweichmanöver, behält. Diese Vorrichtung kann beispielsweise für die Lenkung von Personenkraftwagen eingesetzt werden.

Aus der DE 196 32 929 C1 ist eine Vorrichtung zur selbsttätigen Querführung eines Fahrzeuges längs einer Fahrspur bekannt, bei der die Vorrichtung mittels einer Aktivierungsbetätigung eines Bedienelementes derart aktivierbar ist, daß der zum Aktivierungszeitpunkt vorliegende Querpositions-Istwert als Querpositions-Sollwert des anschließenden, selbsttätigen Querführungsbetriebs dient. Diese Vorrichtung kann beispielsweise zur selbsttätigen Querführung von Straßenfahrzeugen verwendet werden.

Aus der DE 100 17 279 A1 ist ein System zur automatischen Folgeführung, insbesondere Staufolgeführung bekannt, bei dem in Stausituationen dem Fahrer sowohl die Fahrzeuglängsregelung als auch die Querregelung abgenommen wird. Das System verwendet hierzu eine Videokamera, die die Fahrspurmarkierungen erkennt und das Fahrzeug entsprechend regelt, wobei der Fahrer jederzeit durch manuellen Eingriff die Staufolgefunktion übersteuern kann.

Aus der US 5,245,422 ist ein automatisches Lenksteuersystem bekannt, das das Fahrzeug in der Fahrspur hält, indem ein Videosensor Videorahmen erzeugt, die von einem Computer bezüglich der Fahrspurmarkierungen untersucht werden und die eigene Position des Fahrzeugs bestimmt wird. Dieses Lenksteuersystem kann vorteilhaft mit einem adaptiven Geschwindigkeitsregler kombiniert werden.

Aus der DE 40 14 365 A1 ist ein Parallelfahrt-Regelsystem bekannt, das Abstände zu einer Leiteinrichtung auf der Straße oder in der Nähe der Straße mißt und die gemessenen Abstände möglichst konstant hält, um das Fahrzeug auf der Fahrspur zu halten. Zur Korrektur des Kurses werden Bremseinrichtungen auf der linken oder der rechten Fahrzeugseite mit Druck beaufschlagt, so dass das Fahrzeug infolge dieser Bremsenansteuerung eine Drehung um die Fahrzeughochachse erfährt, wodurch der zukünftige Fahrzeugkurs korrigiert werden kann.

Aus der EP 1 063 149 A2 ist ein Fahrzeugsteuerungssystem bekannt, das erkennt, ob ein Fahrer das Fahrzeug selbst lenken möchte oder die Lenkung dem System überlassen möchte. Hierzu wird die Querablage des Fahrzeugs, das Lenkmoment sowie die Lenkmomentenänderung bestimmt, und daraus abgeleitet, ob der Fahrer selbst lenken möchte. Wurde aufgrund zweier Entscheidungen erkannt, dass der Fahrer nicht lenken möchte, so wird der Fahrer gewarnt und/oder das Steuersystem abgeschaltet.

Aus der DE 43 32 836 C1 ist eine lenkregelnde Vorrichtung bekannt, bei der neben einer Fahrzeuglageerkennungseinrichtung und einer Lenkregelungseinrichtung, die eine Lenkwinkelstelleinrichtung beaufschlagt, sowohl eine vorwählbare Begrenzung der regelungsangeforderten Lenkwinkeleinstellung sowie auch die Überlagerung einer fahrerangeforderten Lenkwinkeleinstellung mit der regelungsangeforderten Lenkwinkeleinstellung beinhaltet ist, wobei die Lenkwinkelstelleinrichtung den Lenkwinkel gemäß dieser Überlagerung einstellt. Damit werden kleinere Lenkbewegungen von der Regelung bewältigt, während der Fahrer gleichzeitig seine Eingriffsmöglichkeit für größere Lenkbewegungen, z. B. für Fahrspurwechsel und Ausweichmanöver, behält. Diese Vorrichtung kann beispielsweise für die Lenkung von Personenkraftwagen eingesetzt werden.

Aus der DE 196 32 929 **C1** ist eine Vorrichtung zur selbsttätigen Querführung eines Fahrzeuges längs einer Fahrspur bekannt, bei der die Vorrichtung mittels einer Aktivierungsbetätigung eines Bedienelementes derart aktivierbar ist, daß der zum Aktivierungszeitpunkt vorliegende Querpositions-Istwert als Querpositions-Sollwert des anschließenden, selbsttätigen Querführungsbetriebs dient. Diese Vorrichtung kann beispielsweise zur selbsttätigen Querführung von Straßenfahrzeugen verwendet werden.

### AUFGABE, LÖSUNG UND VORTEILE DER ERFINDUNG

Aufgabe der Erfindung ist es, eine Vorrichtung zur Querführungsunterstützung zu schaffen, die einen erhöhten Fahrkomfort bei Aktionen des Fahrers schafft.

Diese Aufgabe wird erfindungsgemäss durch eine Aktionssensoreinrichtung gemäß der Merkmale des unabhängigen Anspruchs 1 gelöst.

Durch die Überlagerung der Aktionen des Fahrers mit dem Regelverhalten der Querführungsvorrichtung kann es unter bestimmten Umständen zu einem schwer beherrschbaren und daher potenziell gefährlichen dynamischen Verhalten des Fahrzeugs kommen. Dies gilt insbesondere in Situationen, in denen sich der Fahrer zu einem plötzlichen Ausweichmanöver veranlasst sieht, etwa weil ein auf einer Nebenspur dicht vorausfahrendes Fahrzeug plötzlich auf die eigene Spur wechselt. Der aktive Eingriff des Fahrers in die Fahrzeuglenkung oder gegebenenfalls auch in das Bremssystem oder Antriebssystem des Fahrzeugs kann dann durch eine gegensinnige Wirkung des Querführungssystems gehemmt, verzögert oder erschwert werden oder zu einer überschiessenden Gegenreaktion oder, im Fall gleichsinniger Wirkung, zu einer Überreaktion führen, unter Umständen bis zu dem Punkt, an dem das Fahrzeug ausser Kontrolle gerät.

Es ist deshalb eine Aktionssensoreinrichtung vorgesehen, die solche durch eine relativ hohe Dynamik gekennzeichneten Aktionen des Fahrers detektiert und an die Umschalteinrichtung meldet, die dann den Betriebsmodus der Querführungsvorrichtung wechselt, damit unerwünschte Interferenzen mit dem Regelsystem vermieden werden. Der Wechsel des Betriebsmodus besteht im einfachsten Fall darin, dass die Querführungsunterstützung in einen Ruhemodus geschaltet oder ganz abgeschaltet wird. Auf diese Weise kann die Fahrsicherheit beträchtlich verbessert werden.

Die Erfindung eignet sich jedoch auch zur Verbesserung des Fahrkomforts bei Aktionen des Fahrers, die eine geringere Dynamik aufweisen. Ein Anwendungsbeispiel ist etwa die Situation, dass die von dem Fahrzeug befahrene Fahrbahn teilweise durch am Fahrbahnrand parkende Fahrzeuge verstellt ist, so dass der Fahrer gezwungen ist, stark versetzt zur Spurmitte zu fahren. In diesem Fall hätte das Querführungssystem die Tendenz, das Fahrzeug auf die Spurmitte zurückzuführen, so dass der Fahrer ständig mit Hilfe des Lenkrads gegenhalten müsste. Dies würde zu einer Beeinträchtigung des Komforts und auf längere Sicht zu einer Ermüdung des Fahrers führen. Der Wechsel des Betriebsmodus kann in dieser Situation ebenfalls in einer Inaktivierung des Querführungssystems bestehen, eventuell aber auch in einer Anpassung des Sollwertes für die Querposition.

Die Umschalteinrichtung ist so ausgelegt, dass sie die Regeleinrichtung automatisch wieder aktiviert, wenn innerhalb einer vorgegebenen Zeitspanne keine Abschaltbedingung aufgetreten ist.

Vorteilhafte Ausgestaltungen der Erfindung ergeben sich aus den Unteransprüchen.

Die Aktionssensoreinrichtung umfasst bevorzugt einen Lenkwinkelsensor, mit dem der Lenkeingriff des Fahrers am Lenkgetriebe, an der Lenksäule oder an einer anderen geeigneten Stelle detektiert wird. Eine der Aktionen, die zu einem Wechsel des Betriebsmodus führen, kann dann dadurch definiert sein, dass der vom Fahrer veranlasste Lenkwinkel und/oder dessen erste oder zweite zeitliche Ableitung einen jeweils zugehörigen Schwellenwert übersteigt. Anstelle des Lenkwinkels kann wahlweise oder zusätzlich auch das vom Fahrer ausgeübte Lenkdrehmoment detektiert werden. Eine weitere der vordefinierten Aktionen besteht darin, dass der Lenkeingriff des Fahrers, der zu einem von dem Befehl der Regeleinrichtung abweichenden Lenkverhalten führt, über eine bestimmte Zeitspanne hinweg anhält oder dass der durch den Lenkeingriff erzwungene Istwert für die Querposition des Fahrzeugs über einen längeren Zeitraum vom gültigen Sollwert abweicht. Im letzteren Fall besteht der Wechsel des Betriebsmodus zweckmässig in einer Anpassung des Sollwertes an den Istwert.

Die Aktionssensoreinrichtung kann auch einen Bremspedal- oder Bremskraftsensor umfassen, mit dem heftige Bremsmanöver des Fahrers detektiert werden, oder einen Sensor, der das Wirksamwerden eines ABS-Systems des Fahrzeugs meldet. Ebenso kann ein Gaspedalsensor vorhanden sein, der eine Inaktivierung des Querführungssystems bei einer plötzlichen starken Beschleunigung des Fahrzeugs, beispielsweise bei Kick-Down veranlasst.

Die Aktionssensoreinrichtung kann auch einen Beschleunigungssensor umfassen, der auf heftige Längs- oder Querbeschleunigungen des Fahrzeugs reagiert. In diesem Fall können auch externe Einwirkungen erfasst werden, beispielsweise der unerwartete Aufprall eines anderen Fahrzeugs von der Seite oder von hinten oder ein unerwartetes Ausbrechen des Fahrzeugs beim Überfahren eines auf der Fahrbahn liegenden Hindernisses oder bei einseitigem Glatteis oder dergleichen. Ergänzend kann auch ein zum ABS-System oder zu einem elektronischen Stabilitätssystem des Fahrzeugs gehörender Schlupfsensor in die Vorrichtung einbezogen sein. Durch das Abschalten des Querführungssystems als Reaktion auf die Signale dieser Sensoren wird es dann dem Fahrer erleichtert, das Fahrzeug wieder zu stabilisieren.

Wenn die Umschalteinrichtung eine Selbstabschaltung des Querführungssystems veranlasst, sollte dies aus Transparenzgründen dem Fahrer durch ein optisches und/oder akustisches Signal mitgeteilt werden.

Wenn das Querführungssystem dazu ausgebildet ist, Objekte auf den Nebenspuren zu erkennen und den Sollwert für die Querposition des Fahrzeugs oder die Ideallinie des Fahrzeugs in Abhängigkeit von den erfassten Objekten so zu bestimmen, dass ein Sicherheitsabstand zu den betreffenden Objekten eingehalten wird, können Konfliktsituationen auftreten, in denen das Sytem nicht in der Lage ist, automatisch einen geeigneten Sollwert bzw. eine geeignete Ideallinie zu bestimmen. Wenn beispielsweise ein auf einer Nebenspur fahrendes Fahrzeug plötzlich auf die eigene Spur wechselt, ist es unter Umständen nicht möglich, diesem Fahrzeug auszuweichen ohne die Grenzen der eigenen Fahrspur zu verlassen. In diesem Fall kommt es zu einem Zielkonflikt, und in ungünstigen Fällen bleibt nur die Alternative, entweder eine Kollision mit dem anderen Fahrzeug zuzulassen oder das eigene Fahrzeug kontrolliert gegen eine Leitplanke zu fahren. Die Entscheidung in solchen Konfliktsituationen sollte dem Fahrer überlassen bleiben, so dass es auch in diesen Fällen zweckmässig ist, das Querführungssystem abzuschalten und lediglich ein Warnsignal auszugeben.

Bei einer Abschaltung des Querführungssystems oder bei einer Anpassung des Sollwertes sollte der von der Regeleinrichtung ausgegebene Lenkbefehl nicht abrupt, sondern stetig und mit einer begrenzten Änderungsrate auf null zurückgeführt werden, damit eine Irritation des Fahrers vermieden wird.

Im folgenden wird ein Ausführungsbeispiel anhand der Zeichnungen näher erläutert.

### KURZBESCHREIBUNG DER ZEICHNUNGEN

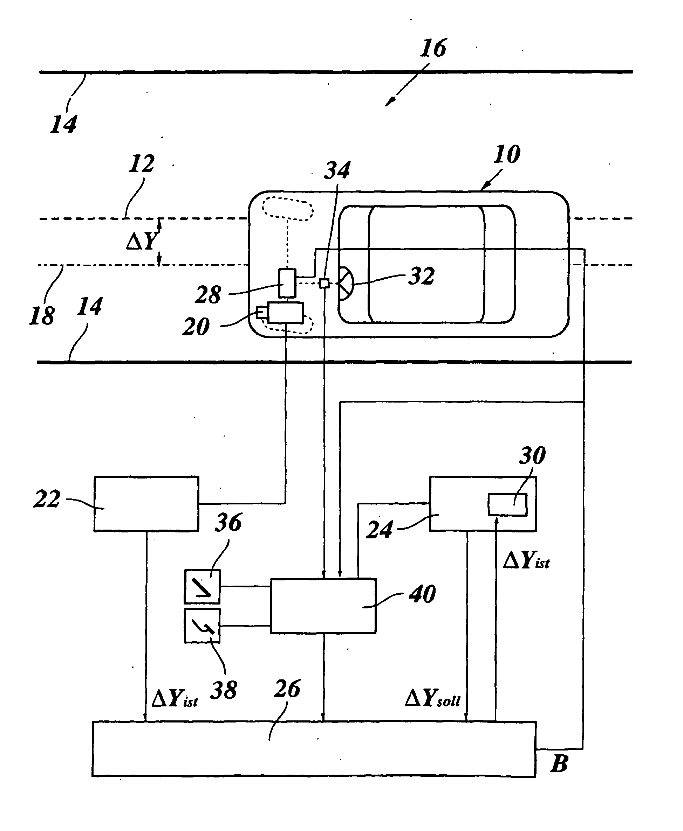

Die einzige Zeichnungsfigur zeigt:
ein Blockdiagramm eines Querführungssystems für ein Kraftfahrzeug.

### BESCHREIBUNG EINES AUSFÜHRUNGSBEISPIELS

In der Zeichnung ist schematisch ein Kraftfahrzeug 10 in der Draufsicht dargestellt, das etwas versetzt zur Spurmitte 12 auf einer durch Grenzen 14 definierten Spur 16 einer mehrspurigen Fahrbahn fährt. Die Längsachse 18 des Kraftfahrzeugs 10 ist strichpunktiert eingezeichnet, und die laterale Abweichung zwischen der Längsachse 18 und der Spurmitte 12 ist mit ΔY bezeichnet.

Das Kraftfahrzeug 10 ist mit einem ADAS-System ausgerüstet, das als Teilsystem ein Querführungssystem mit den folgenden, in Form eines Blockdiagramms dargestellten Komponenten umfasst: eine durch eine Videokamera 20 und eine Bildverarbeitungseinheit 22 gebildete Sensoreinrichtung, eine Vorgabeeinrichtung 24 zur Vorgabe eines Sollwertes ΔYₛₒₗₗ für die Querposition des Kraftfahrzeugs 10, eine Regeleinrichtung 26 und ein Lenkungsstellglied 28, das durch einen Befehl B der Regeleinrichtung 26 angesteuert wird und in die Fahrzeuglenkung eingreift, um die Querposition des Kraftfahrzeugs 10 auf den Sollwert zu regeln.

Die Ist-Position des Fahrzeugs in der Richtung quer zur Längsachse 18 wird im gezeigten Beispiel mit der durch die Videokamera 20 und die Bildverarbeitungseinheit 22 gebildeten Sensoreinrichtung erfasst. Dazu wertet die Bildverarbeitungseinheit 22 das von der Kamera aufgenommene Videobild aus, um die Grenzen 14 und die Lage des Kraftfahrzeugs 10 relativ zu diesen Grenzen zu erkennen. Diese Ausführungsform der Sensoreinrichtung ist lediglich als Beispiel zu verstehen und kann beispielsweise durch Magnetsensoren ersetzt werden, die magnetische Markierungen für die Fahrbahngrenzen erfassen. Ebenso könnten die Fahrbahngrenzen auch mit Hilfe von Reflektoren markiert werden, die von einem Radarsystem des Fahrzeugs erfasst werden. Weiterhin ist es denkbar, dass die Koordinaten der Grenzen 14 im Fahrzeug gespeichert sind und die Sensoreinrichtung ein satellitengstütztes Positionssystem, z.B. DGPS, umfasst, mit dem die Fahrzeugposition mit hoher Auflösung bestimmt wird.

Wenn die Lage beider Grenzen 14 relativ zum Kraftfahrzeug 10 bekannt ist, lässt sich aus diesen Daten auch die Breite der Spur 16 sowie die Lage der Spurmitte 12 ermitteln. Die Sensoreinrichtung ist daher in der Lage, die Ist-Position des Kraftfahrzeugs 10, ausgedrückt durch einen Ist-Wert ΔYᵢₛₜ für die laterale Abweichung ΔY, an die Regeleinrichtung 26 zu übermitteln. Anhand eines Vergleichs des Ist-Wertes ΔYᵢₛₜ mit dem Sollwert ΔYₛₒₗₗ bildet die Regeleinrichtung 26 dann den Befehl B, der an das Lenkungsstellglied 28 übermittelt wird. Der Sollwert ΔYₛₒₗₗ wird ebenfalls als laterale Abweichung von der Spurmitte 12 ausgedrückt.

Die Vorgabeeinrichtung 24 enthält einen Speicher 30, in dem der gültige Sollwert gespeichert ist. Dieser Sollwert kann beispielsweise der Spurmitte 12 entsprechen oder um ein vom Fahrer einstellbares Mass davon abweichen.

Der Fahrer des Kraftfahrzeugs 10 kann die Funktion des oben beschriebenen Querführungssystems jederzeit übersteuern, indem er über das Lenkrad 32 den Lenkwinkel der Vorderräder des Fahrzeugs bestimmt. Das Drehmoment, das der Fahrer dazu auf das Lenkrad ausüben muss, wird durch das vom Lenkungsstellglied 28 erzeugte Lenkdrehmoment entweder verringert oder vergrössert, je nach dem, ob der von der Regeleinrichtung 26 ausgegebene Befehl und die Lenkaktion des Fahrers in dergleichen Richtung oder in entgegengesetzte Richtungen wirken.

Eine Aktionssensoreinrichtung umfasst im gezeigten Beispiel einen Lenkwinkelsensor 34, einen Bremskraftsensor 36 und einen Gaspedalsensor 38. Der Lenkwinkelsensor 34 detektiert den tatsächlich eingestellten Lenkwinkel, der sich im Fall einer Lenkaktion des Fahrers von dem durch den Befehl B spezifizierten Soll-Lenkwinkel unterscheidet. Der Bremskraftsensor 36 liefert ein Brems-Aktionssignal, wenn die vom Fahrer auf das Bremspedal ausgeübte Pedalkraft einen bestimmten Schwellenwert überschreitet. Der Gaspedalsensor 38 liefert ein Gas-Aktionssignal, wenn der Fahrer das Gaspedal ganz durchtritt (Kick-Down).

Die Signale der durch die Sensoren 34, 36 und 38 gebildeten Aktionssensoreinrichtung werden einer Umschalteinrichtung 40 zugeführt und dort ausgewertet. Von dem Lenkwinkelsignal des Lenkwinkelsensors 34 werden die erste und die zweite zeitliche Ableitung gebildet. Anhand des Lenkwinkelsignals und seiner Ableitungen entscheidet die Umschalteinrichtung 40, ob eine Lenkaktion des Fahrers vorliegt, bei der eine Abschaltung die Regeleinrichtung 26 geboten ist. Diese Entscheidung kann etwa in der Weise getroffen werden, dass das Lenkwinkelsignal, dessen erste Ableitung und dessen zweite Ableitung jeweils mit einem Schwellenwert verglichen werden und dass ein Abschaltbefehl an die Regeleinrichtung 36 ausgegeben wird, wenn mindestens einer dieser Schwellenwerte überschritten wird. Wahlweise kann der Abschaltbefehl auch dann ausgegeben werden, wenn sämtliche Schwellenwerte überschritten werden, oder es werden für jede Grösse ein unterer und ein oberer Schwellenwert festgelegt, und der Abschaltbefehl wird ausgegeben, wenn jede Grösse den unteren Schwellenwert übersteigt oder mindestens eine Grösse den oberen Schwellenwert übersteigt. Eine weitere Alternative besteht darin, den Lenkwinkel und dessen erste und zweite Ableitung jeweils mit einem Gewichtsfaktor zu multiplizieren und dann die Summe der gewichteten Grössen mit einem Schwellenwert zu vergleichen. In jedem Fall wird durch die Entscheidungsprozedur sichergestellt, dass die Regeleinrichtung 26 abgeschaltet wird, wenn der Fahrer über das Lenkrad 32 einen sehr dynamischen Lenkeingriff vornimmt, wie es typischerweise bei einem Ausweichmanöver der Fall ist. Ebenso führen auch das Signal des Bremskraftsensors 36 und das Signal des Gaspedalsensors 38 zur Ausgabe eines Abschaltbefehls an die Regeleinrichtung 26. Gleichzeitig mit dem Abschaltbefehl wird ein Warnhinweis an den Fahrer ausgegeben. Der Fahrer kann dann die Regeleinrichtung 26 von Hand wieder aktivieren.

Die Umschalteinrichtung 40 ist so ausgelegt, dass sie die Regeleinrichtung 26 automatisch wieder aktiviert, wenn innerhalb einer vorgegebenen Zeitspanne keine Abschaltbedingung aufgetreten ist.

Im gezeigten Beispiel vergleicht die Umschalteinrichtung 40 das Lenkwinkelsignal des Lenkwinkelsensors 34 auch mit dem Soll-Lenkwinkel, der durch den Befehl B spezifiziert wird. Wenn der gemessene Lenkwinkel während einer vorgegebenen Zeitspanne um mehr als einen bestimmten Schwellenwert von dem Befehl B abweicht, so gibt die Umschalteinrichtung 40 einen Befehl an die Vorgabeeinrichtung 24 aus, den im Speicher 30 gespeicherten Sollwert ΔYₛₒₗₗ für die Querposition des Fahrzeugs anzupassen. Diese Anpassung besteht darin, dass der augenblickliche Istwert ΔYᵢₛₜ als neuer Sollwert übernommen wird. Wenn folglich der Fahrer eine gewisse zeitlang gegenlenkt, um versetzt zu der durch den Sollwert ΔY_{Soll} spezifizierten Querposition zu fahren, so bleibt die Regeleinrichtung 26 zwar aktiv, doch wird durch Anpassung des Sollwertes sichergestellt, dass der Fahrer nicht länger gegenzuhalten braucht. In einer modifizierten Ausführungsform kann jedoch auch unter diesen Bedingungen die Regeleinrichtung 26 ganz abgeschaltet werden.

## Patentansprüche

1. Vorrichtung zur Querführungsunterstützung bei Kraftfahrzeugen (10), mit einer Vorgabeeinrichtung (24) zur Vorgabe eines Sollwertes (ΔYₛₒₗₗ) für die Querposition des Fahrzeugs, einer Sensoreinrichtung (20, 22) zur Erfassung der Ist-Position (ΔYᵢₛₜ) des Fahrzeugs relativ zu den Grenzen (14) der befahrenen Spur (16) und einer Regeleinrichtung (26), die aufgrund eines Soll/Ist-Vergleichs einen Befehl (B) zur Erzeugung eines den Fahrer bei seinen Lenkaktionen unterstützenden Lenkdrehmoments ausgibt, wobei eine Aktionssensoreinrichtung (34, 36, 38) zur Detektion einer vordefinierten Klasse von Aktionen des Fahrers und eine Umschalteinrichtung (40) zum Wechsel des Betriebsmodus der Querführungsvorrichtung vorgesehen sind, wenn eine der vordefinierten Klasse angehörende Aktion des Fahrers detektiert wird, wobei die Klasse der vordefinierten Aktionen eine Aktion umfaßt, die darin besteht, daß der Fahrer während eines bestimmten Zeitintervalls fortdauernd eine Abweichung des Istwertes der Querposition des Fahrzeugs von dem Sollwert erzwingt und in diesem Fall die Umschalteinrichtung (40) dazu ausgebildet ist, den Sollwert an den aktuellen Istwert anzupassen, wobei der Sollwert von der Spurmitte (12) um ein vom Fahrer einstellbares Maß abweichen kann, **dadurch gekennzeichnet, dass** die Regeleinrichtung (26) inaktiviert wird, wenn ein heftiger Eingriff des Fahrers in das Brems- oder Antriebssystem des Fahrzeugs erkannt wird und die Regeleinrichtung automatisch wieder aktiviert wird, wenn innerhalb einer vorgegebenen Zeitspanne keine Abschaltbedingung aufgetreten ist.

2. Vorrichtung nach Anspruch 1, **dadurch gekennzeichnet, daß** die Aktionssensoreinrichtung einen Lenkwinkelsensor (34) und/oder einen Lenkdrehmomentsensor umfaßt.

3. Vorrichtung nach Anspruch 1 oder 2, **dadurch gekennzeichnet, daß** die Aktionssensoreinrichtung einen Bremskraftsensor (36) umfaßt, der ein Signal ausgibt, wenn die Betätigung eines Bremspedals oder die vom Bremssystem des Fahrzeugs erzeugte Bremskraft oberhalb eines bestimmten Schwellenwertes liegt.

4. Vorrichtung nach einem der vorstehenden Ansprüche, **dadurch gekennzeichnet, daß** die vordefinierte Klasse von Aktionen eine Aktion umfaßt, die einem heftigen, für Ausweichmanöver typischen Eingriff des Fahrers in die Lenkung entspricht.

5. Vorrichtung nach Anspruch 4, **dadurch gekennzeichnet, daß** die Klasse der vordefinierten Aktionen eine Aktion umfaßt, die einem heftigen Eingriff des Fahrers in das Brems- oder Antriebssystem des Fahrzeugs entspricht.

6. Vorrichtung nach Anspruch 1, 4 oder 5, **dadurch gekennzeichnet, daß** die Umschalteinrichtung (40) dazu ausgebildet ist, die Regeleinrichtung (26) zu inaktivieren, wenn die in Anspruch 1, 4 oder 5 angegebene Aktion detektiert wird.

## Claims

1. Lateral guiding assistance device for motor vehicles (10), having a predefining device (24) for predefining a setpoint value (ΔYₛₑₜ) for the lateral position of the vehicle, a sensor device (20, 22) for sensing the actual position (ΔY_{act}) of the vehicle relative to the boundaries (14) of the lane (16) being travelled on, and a regulating device (26) which, on the basis of a setpoint/actual value comparison outputs a command (B) to generate a steering torque which supports the driver in his steering actions, wherin an action sensor device (34, 36, 38) for detecting a predefined class of actions of the driver and a switching device (40) for switching over the operating mode of the lateral guiding device are provided if an action by the driver which is associated with the predefined class is detected, wherein the class of predefined actions comprises an action which consists in the fact that during a specific time interval the driver continuously forcibly brings about a deviation between the actual value of the lateral position of the vehicle and the setpoint value and in this case the switching device (40) is designed to adapt the setpoint value to the current actual value, wherein the setpoint value can deviate from the centre (12) of the lane by an amount which can be set by the driver, **characterized in that** the regulating device (26) is deactivated if a violent intervention by the driver into the brake system or drive system of the vehicle is identified, and the regulating device is automatically reactivated again if deactivation conditions have not occurred within a predefined period of time.

2. Device according to Claim 1, **characterized in that** the action sensor device comprises a steering angle sensor (34) and/or a steering torque sensor.

3. Device according to Claim 1 or 2, **characterized in that** the action sensor device comprises a braking force sensor (36) which outputs a signal if the actuation of a brake pedal or the braking force which is generated by the brake system of the vehicle lies above a specific threshold value.

4. Device according to one of the preceding claims, **characterized in that** the predefined class of actions comprises an action which corresponds to the violent intervention by the driver in the steering system, which is typical of an avoidance manoeuvre.

5. Device according to Claim 4, **characterized in that** the class of the predefined actions comprises an action which corresponds to a violent intervention by the driver into the brake system or drive system of the vehicle.

6. Device according to Claim 1, 4 or 5, **characterized in that** the switching device (40) is designed to deactivate the regulating device (26) if the action specified in Claim 1, 4 or 5 is detected.

## Revendications

1. Dispositif d'assistance au guidage transversal pour véhicules automobiles (10), comprenant une installation de prédéfinition (24) pour prédéfinir une valeur de consigne (ΔY_{cons}) pour la position transversale du véhicule, une installation de capteur (20, 22) pour détecter la position réelle (ΔY_{réel}) du véhicule par rapport aux limites (14) de la voie suivie (16) et une installation de régulation (26) produisant, suite à une comparaison valeur de consigne/réelle, un ordre (B) de génération d'un couple de direction assistant le conducteur lors de ses actions sur la direction, une installation de capteur d'actions (34, 36, 38) pour détecter une catégorie prédéfinie d'actions du conducteur et une installation de commutation (40) pour changer le mode de fonctionnement du dispositif de guidage transversal étant prévues lorsqu'une action du conducteur appartenant à la catégorie prédéfinie est détectée, la catégorie d'actions prédéfinies comprenant une action qui consiste en ce que le conducteur force, de manière continue et pendant un intervalle de temps déterminé, une déviation de la valeur réelle de la position transversale du véhicule par rapport à la valeur de consigne et, dans ce cas, l'installation de commutation (40) est configurée pour adapter la valeur de consigne à la valeur réelle actuelle,
la valeur de consigne pouvant s'écarter du centre de la voie (12) d'une certaine quantité qui peut être réglée par le conducteur, **caractérisé en ce que** l'installation de régulation (26) est désactivée lorsqu'une intervention violente du conducteur sur le système de freinage ou d'entraînement du véhicule est détectée, et l'installation de régulation est à nouveau activée automatiquement lorsqu'aucune condition de coupure n'a eu lieu pendant un intervalle de temps prédéfini.

2. Dispositif selon la revendication 1,
**caractérisé en ce que**
l'installation de capteur d'actions comprend un capteur d'angle de direction (34) et/ ou un capteur de couple de direction.

3. Dispositif selon la revendication 1 ou 2,
**caractérisé en ce que**
l'installation de capteur d'actions comprend un capteur de force de freinage (36) qui génère un signal lorsque l'actionnement d'une pédale de frein ou la force de freinage produite par le système de freinage du véhicule se trouve au-dessus d'un certain seuil.

4. Dispositif selon l'une des revendications précédentes,
**caractérisé en ce que**
la catégorie d'actions prédéfinie comprend une action correspondant à une intervention violente du conducteur dans la direction qui est typique pour les manoeuvres d'évitement.

5. Dispositif selon la revendication 4,
**caractérisé en ce que**
la catégorie d'actions prédéfinie comprend une action correspondant à une intervention violente du conducteur dans le système de freinage ou d'entraînement du véhicule.

6. Dispositif selon la revendication 1, 4 ou 5,
**caractérisé en ce que**
l'installation de commutation (40) est configurée de manière à désactiver l'installation de régulation (26) lorsque l'action indiquée en revendication 1, 4 ou 5 est détectée.
